# EUROPEAN PATENT APPLICATION

(11) **EP 4 703 226 A1**
(43) Date of publication of application: **04.03.2026**
(21) Application number: 24196540.9
(22) Date of filing: 26.08.2024
(51) Int. Cl.: B60W 50/08

(54) **SYSTEM AND METHOD FOR RULE-BASED OPERATION OF A MOTOR VEHICLE**

(71) Applicant: Aptiv Technologies AG, 8200 Schaffhausen (CH)
(72) Inventor: Barth, Alexander, 42929 Wermelskirchen (DE); Nunn, Christian, 42499 Hückeswagen (DE)
(74) Representative: Manitz Finsterwald Patent- und Rechtsanwaltspartnerschaft mbB

(57) **Abstract**

A system for rule-based operation of a vehicle is provided, comprising one or more sensors configured to monitor an interior and/or an exterior of the vehicle and/or receive a user input, and to thereby collect data related to a state of the vehicle and/or a state of the surrounding of the vehicle, and an action of the user of the vehicle and/or the user input. The system comprises a processor configured to use a machine learning model, preferably a large language model, with input data based on the collected data to generate a rule for operating the vehicle. The rule includes at least one action associated with at least one condition and/or at least one event. The processor is configured to analyze the collected data to validate that the condition is met and/or that the event has occurred, and cause the vehicle to perform the action.

## Description

### FIELD

The present disclosure relates to a system, use, and method for rule-based operation of a vehicle, particularly a motor vehicle. More specifically, the present invention relates to a system, use, and method for operating a vehicle according to rules generated by use of a machine learning algorithm, and preferably, by use of a large language model.

### BACKGROUND

Today's vehicles, particularly motor vehicles such as cars, busses or similar, have many capabilities, settings, or parameters for operating the vehicle that can be adjusted or customized for improvement of the user experience and the driving behavior of the vehicle. Examples would be the cabin lighting, infotainment system, cabin temperature, Advanced Driver Assistance Systems (ADAS), navigation system, seat settings, among others.

In view of this, the user may have to follow several complicated steps in order to adjust or change a capability, setting, or parameter for operation of the vehicle, which sets down the user experience. Current systems and methods allow the user to change capabilities, settings, or parameters for operating the vehicle by recognition of a predefined command uttered by the user. The predefined commands may be stored in and retrieved from a user profile.

However, not all available capabilities, settings, or parameters for operation of the vehicle may be known to the user. Particularly, the user may not be aware of all available commands. Furthermore, a predefined command may be missing for having the vehicle perform a certain action or task, i.e. adjusting or changing a certain capability, setting, or parameter for operation of the vehicle. In systems and methods of the state of the art the addition of a new command may only be carried out by an expert, e.g. the manufacturer or maintenance specialist of the vehicle, and thus, may only be possible from factory or during maintenance of the vehicle.

WO 2023/220194 A1 describes methods and systems for in-vehicle generation of personalized routines using voice commands. However, the methods and systems of WO 2023/220194 A1 may lack in robustness and may fail when tasked with the generation of routines of higher complexity.

Accordingly, there is a need for an improved system, use, and method for rule-based operation of a vehicle, particularly in terms of capability, robustness, and ease of generation of complex rules for operating a vehicle.

### SUMMARY

The present disclosure provides a system, use, and method for rule-based operation of a vehicle according to the independent claims. Embodiments are given in the subclaims, the description and the drawings.

In one aspect, the present disclosure is directed at a system for rule-based operation of a vehicle, preferably a motor vehicle. The system comprises one or more sensors configured to monitor an interior and/or an exterior of the vehicle and/or receive a user input. Thereby, the one or more sensors collect data related to a state of the vehicle and/or a state of the surrounding of the vehicle. In addition, the one or more sensors collect data related to an action of the user of the vehicle and/or the user input. The system further comprises a processor configured to receive the collected data from the one or more sensors, and to use a machine learning model with input data based on the collected data to generate a rule for operating the vehicle. The rule includes at least one action associated with at least one condition and/or at least one event. The machine learning model is a large language model or a neural network with multi-modal capabilities, and preferably is a large language model. The processor is further configured to analyze the collected data to validate that the at least one condition is met and/or that the at least one event has occurred, and cause the vehicle to perform the action.

Examples for the one or more sensors would be cabin cameras, exterior cameras, radars, temperature sensors, pressure sensors, weight sensors, light sensors, seat sensors, rain sensors, microphones, touchscreen, seatbelt-sensors, GPS module, fill level sensors, a clock, and other sensors coupled with or mounted to the vehicle. According to an embodiment, the one or more sensors are mounted inside the vehicle, and in particular, in the cabin of the vehicle. It is to be understood that the one or more sensors may also refer to one or more components of the vehicle that are operated by the user, which are configured to report their settings or a change of their settings as collected data.

Accordingly, the collected data related to the state of the vehicle may include data related to the cabin temperature, geolocation of the vehicle, destination of the navigation, the time of day, fuel fill level, battery load, presence of objects in the vehicle, among other examples. The collected data related to the state of the surrounding of the vehicle may include data related to the outside temperature, presence of rain, daylight situation, presence of remote objects or devices in the proximity of the vehicle, among others.

The one or more sensors may include capabilities for receiving a user input. For example, the one or more sensors may include a touchscreen for receiving a text input by the user. Additionally or alternatively, the one or more sensors may include a microphone for receiving a voice command. Additionally or alternatively, the one or more sensors may include a camera for capturing a gesture, in particular, a hand gesture of the user. The one or more sensors and/or the processor may include or have access to voice-recognition capabilities for receiving the user input. Additionally or alternatively, the one or more sensors and/or the processor may include or have access to capabilities for recognizing a gesture, particularly a hand gesture, performed by the user. These recognition capabilities may rely on pretrained models available in the state of the art.

According to an embodiment, an action of the user monitored by the one or more sensors may refer to various actions performed by the user besides (direct or intentional) user inputs such as voice commands, text inputs, or gestures. For example, a user action monitored by the one or more sensors may refer to the user manually setting, adjusting, or changing a capability, a setting, or a parameter for operating vehicle. It is to be understood that the one or more sensors may also refer to one or more components of the vehicle that are operated by the user and reporting their settings or a change of their settings as collected data to the processor. In a further example, a user action may refer to the user entering or exiting the vehicle, and more specifically, occupying or leaving a specific spot or seat in the cabin of the vehicle. A user action may reflect a mood state, wake state or vital state of the user, e.g. the user making a certain facial expression, showing certain vital signs, having widened pupils, among others. In view of this, the one or more sensors or the processor may include or have access to face-recognition capabilities. Again, it is to be understood that a pretrained model for face-recognition may be employed for this task. Alternatively or additionally, the one or more sensors may comprise other means for identifying the user, e.g. scanning and/or recognizing a fingerprint, receiving a pin code, recognizing that the user's smartphone is connected to the vehicle (e.g. via Bluetooth), inside the vehicle, and/or close to the vehicle,

The one or more sensors may monitor an interior and/or an exterior of the vehicle by continuously recording data which may be, on a regular basis and/or periodically, transferred to the processor. Additionally or alternatively, the one or more sensors may start monitoring upon the occurrence of a trigger event, e.g. the user entering or starting the car, the receipt of a user input indicating the intention of the user to start the monitoring, among others. The one or more sensors may be configured to transfer the collected data, on a regular basis and/or periodically, to the processor. Additionally or alternatively, the processor may be configured to retrieve the collected data, on a regular basis and/or periodically, from the one or more sensors. The connection or coupling between the one or more sensors and the processor for data transfer may be wired (e.g. LAN, Ethernet, among others) or wireless (e.g. visual signals, radio signals, Bluetooth, WLAN, among others).

The processor may be or comprise a computer comprising a single core or multiple cores, a Graphics Processing Unit (GPU), an integrated circuit, a microcontroller, a Field Programmable Gate Array (FPGA), a System on a Chip (SoC), an Electronic Control Unit (ECU), or a multi-domain controller. According to an example, parts of the processing (e.g. the large language model) may be hosted in a cloud server outside the vehicle. The system, and in particular the processor, may comprise a communication module for communicating with the cloud server. In a further example, the processing may be fully hosted inside the vehicle using on-board compute capabilities. The processor may be connected to, coupled to, mounted to, or in-built in the vehicle.

The machine learning model is a large language model or a neural network with multi-modal capabilities. More specifically, the neural network may support multi-modal input data, i.e. data of different types such as audio, text, and visual data.

The machine learning model may convert the input into a rule representation, which may be considered as set of instructions, a number of parameters, or code that can be interpreted by the processor at runtime.

Preferably, the machine learning model is a large language model. The machine learning model may be an available pretrained large language model such as the GPT series, among others. The machine learning model may be installed locally or may be remotely accessible for the processor. Recent achievements in the area of large language models enable a new and enhanced level of understanding of semantic meaning in input data. This way, the capabilities of the system to generate rules for operating the vehicle may be improved, in particular in terms of robustness and achievable complexity of the generated rules.

The machine learning model is used by the processor with input data based on the collected data to generate the rule for operating the vehicle. The collected data may be pre-processed by the processor before being inputted to the machine learning model. For example, the processor may pre-process (e.g. by voice processing or image processing) the collected data or a part of the collected data (e.g. data recorded by a cabin microphone or by a cabin camera) in order to generate a text, i.e. natural-language, input prompt for the large language model. Additionally or alternatively, the collected data may be used directly as input to the large language model. For example, modern available large language models may support multi-modal input data, e.g. may support input data containing text, audio, and/or image data. In that case, it is also possible that audio data collected by a cabin microphone or visual data collected by a cabin camera may be directly inputted to the large language model. This way, the user can address a large number of tasks by using (essentially raw) sensory data and/or natural-language input prompts as input data for the large language model. The rule generation may be performed by the processor at runtime.

According to an embodiment, the large language model receives a general task, one or more input prompt snippets, and (optionally) a request for a structured output format as input. According to an embodiment, the general task is: "Analyze and understand the input provided in command within the <text> tags and output only: person, condition, event, action in a bulleted list. Consider the vehicle state within the <state> tags". The request for a structured output format may be: "Follow the json format provided here: <format> {"person":, "event":, "condition":, "action":,} </format>".

If no event is recognized, the output can be set to the empty string "" or another specific string reserved to encode that there is no event. In that case, the rule may be always executed once the condition is met. In an example, if the condition is also empty, the rule may be considered as incomplete and may not be generated. The corresponding procedure may be carried out in case no condition is recognized, i.e. the output can be set to the empty string "" or another specific string reserved to encode that there is no condition. In that case, the rule may be always executed once the event occurs. If the event is also empty, the rule may be considered as incomplete and may not be generated.

According to an example, the user may utter the command: "When the cabin temperature is at or exceeds 25°C, switch on the air conditioning and set the temperature to 20°C", which is recorded by a cabin microphone. Other examples for user inputs are:
- "Whenever I am alone in the car, please adjust the cabin lighting theme to "Ocean", the cabin temperature to 19°C and the Adaptive-Cruise-Control distance to lead vehicle to the minimum. If my kids are also in the cabin, please change the cabin lighting theme to "Colorful", increase the cabin temperature by 1°C, and increase the Adaptive-Cruise-Control distance to maximum. If my wife is also in the cabin, increase the temperature by 2°C."
- "Whenever I get close to my home, please play the song "Coming home"
- "Please mute the radio when I perform this gesture [doing specific hand gesture]"
- "Upon getting close to a coffee place XY turn the cabin lighting green"
- "When passengers are in the rear seat and the front passenger seat is empty, move the front passenger seat all the way to the front, unless there is a large object in the front foot well or on the seat"
- "When I turn around and it is dark outside, please turn on the floor lights on the rear seat, but only if there is no passenger sleeping in the rear seat."
- "Whenever my husband looks stressed, turn on the massage seat function automatically for 2 minutes"
- "On weekends if the weather is nice, the kids are on-board and we are going to visit grandma, take the scenic route along the river instead of the highway, but not if it takes more than 10 minutes more than the fastest route."
- "When my daughter is in the rear seat, please pre-load Super Mario to the rear seat infotainment and turn the seat heating off".
- "Open the trunk when I am behind my car for 5 seconds."
- "Whenever I get close to my home, please play the song <Coming home>"

Further, additional, examples with respect to the ADAS are:
- change between different versions of lane keeping (haptic and/or acoustic warning only, steering interaction, steering interaction + haptic and/or acoustic warning, etc.).
- Speed limit warning threshold, e.g. "if I am alone in the car set the speed limit warning threshold to +10, if my kids are also in the cabin, set it to +3".
- Selection of different surround view camera settings for different scenarios (in case multiple settings are available, e.g. top down view, rear camera, side camera, front camera, etc.).

The processor may then pre-process the data collected by the cabin microphone (e.g. by use of voice recognition capabilities) to generate the input prompt snippet "<text> Thomas (driver_seat_voice): When the cabin temperature is at or exceeds 25°C, switch on the air conditioning and set the temperature to 20°C <text>". The general task, the input prompt snippet, and (optionally) the request for the structured output format may then be inputted to the large language model. The output of the large language model, i.e. the generated rule, may then be: {"person": ["Thomas"], "condition": ["cabin temperature is at or exceeds 25°C"], "action": ["switch on air conditioning and set target temperature of the air conditioning to 20°C"].

As an alternative, instead of providing a specific numeric temperature, the user may utter "if it is as warm as now, switch on the air conditioning and set the temperature to 20°C". Another example command could be "if the outdoor temperature is cooler than today, turn on the heating". The processor may then be able to translate this command into reading the current temperature from a list of known, available vehicle signals. More specifically, the output of a temperature sensor in the cabin of the vehicle may measure that the cabin temperature is 25°C. The processor may then pre-process the data collected by the cabin microphone to generate the input prompt snippet "<text> Thomas (driver_seat_voice): If it is as warm as now, switch on the air conditioning and set the temperature to 20°C <text>" and pre-process the data collected by the cabin temperature sensor to generate the input prompt snippet "<state> The cabin temperature is 25°C <state>". The general task, both input prompt snippets, and (optionally) the request for the structured output format may then be inputted to the large language model. The output of the large language model, i.e. the generated rule, may then be: {"person": ["Thomas"], "condition": ["cabin temperature is at or exceeds 25°C"], "action": ["switch on air conditioning and set target temperature of the air conditioning to 20°C"].

The "person" field in the generated rule may enable identifying the initiator or the author of the rule. Correspondingly, the "person" field in the generated rule may also be referred to as "author" field. For example, if the user Thomas is in the vehicle and identified by the system as the subject that utters the commend (wanting to generate the rule), a user command uttered by the user Thomas "if I am in the car ..." can be parsed by the system to "if Thomas is in the car". Instead of the "person" or "author" field, it may also be contemplated to use a logical combination of multiple conditions, e.g. temperature > 25°C AND driver id == Thomas. In other words, the "person" field may also be considered as, replaced by, or comprised in one or more "condition" fields. It is to be understood that there can be more than one person in the car, e.g. a driver and one or more passengers. In that case, the system may generally enable both the driver and the passengers to generate (personalized) rules.

According to another embodiment, another general task is: "Analyze and understand the input of a user action within the <action> tags and the vehicle state within the <state> tags and output only: person, condition, event, action in a bulleted list". In that example, the collected data (e.g. received from a cabin camera and the air conditioning control) may further contain data related to the user action, e.g. the user Thomas switching on the air conditioning and changing the target temperature of the air conditioning to 20°C. In an embodiment, the processor is configured to employ a pattern recognition algorithm to recognize repeated behavior (e.g. repeated user actions) in the collected data and/or is configured to trigger the rule generation upon recognizing the repeated behavior, and particularly, is configured to trigger the inputting of the other general task upon recognizing the repeated behavior. The pattern recognition may be carried out between the data-collection stage and the rule-generation stage. The processor may pre-process the collected data (e.g. by use of face recognition capabilities) to generate the input prompt snippet: "<action> Thomas is in the car. The air conditioning is switched on and the target temperature is set to 20°C <action>". The other general task, the input prompt snippet "<state> The cabin temperature is 25°C <state>", the input prompt snippet: "<action> Thomas is in the car. The air conditioning is switched on and the target temperature is set to 20°C <action>", and (optionally) the request for the structured output format may then be inputted to the large language model. The output of the large language model may then be: {"person": ["Thomas"], "condition": ["cabin temperature is at or exceeds 25°C"], "action": ["switch on air conditioning and set target temperature of the air conditioning to 20°C"]. It is to be understood that, in this example, the rule can be generated by the large language model based on input data that does not contain data related to an intentional or direct user input, e.g. a voice command.

Moreover, the processor may analyze the collected data to validate that the condition in the rule (e.g. "cabin temperature is at or exceeds 25°C") is met. Furthermore, the processor may associate or map the action in the generated rule (e.g. "switch on air conditioning and set target temperature of the air conditioning to 20°C") to one or more instructions for one or more components of the vehicle (e.g. the climate control or air conditioning) as described below.

According to an embodiment, the processor validates that the at least one condition is met and/or that the at least one event has occurred by analyzing the collected data and thereby determine that a parameter or value associated with the condition or the event falls below, is at, or exceeds a certain threshold value. In view of this, the processor may be configured to associate or map the at least one condition or the at least one event to outputs of the one or more sensors. In particular, the processor may be configured to associate or map the at least one condition or the at least one event to vehicle signals or functions of vehicle signals. Such vehicle signals may refer to sensor output messages or vehicle state information on vehicle bus. Functions of vehicle signals may refer to a combination of one or more vehicle signals with at least one mathematical or logical function such as a parameter reaching a threshold value.

For example, a condition may be that the temperature is at or exceeds a certain temperature threshold. The processor may validate that the at least one condition is met by analyzing the collected data and determining that the current cabin temperature is at or exceeds the temperature threshold. This validation process may also involve the processor associating the condition to the collected data of a certain temperature sensor in the cabin of the vehicle. In that case, the corresponding action in the generated rule may refer to switching on the air conditioning and/or setting the target temperature for the control of the air conditioning. An example event may be that a user has entered the vehicle. Accordingly, the processor may validate that the at least one event has occurred by analyzing the collected data and determining that the door of the vehicle was opened and/or that a seat sensor or movement sensor in the cabin provides a positive response. A further example event may be that a specific user, e.g. user named Anna, has entered the vehicle. The processor may then, as alternative or in addition, determine that Anna's face is recognizable in one or more images recorded by a cabin camera, that Anna's voice is recognizable in an audio signal recorded by a cabin microphone, or that Anna's weight measured by a weight sensor in the seat or a camera-based weight classification system matches a predefined value stored in a user profile. Further examples for such triggering events may be the start of the trip, reaching a certain geolocation, the user making an entry to the navigation system, or the user performing a certain act such as looking a certain element in the vehicle.

The processor is further configured to cause the vehicle to perform the action. Example actions include the change of the target (cabin) temperature, the change of a setting of the ADAS, the change of the route in the navigation system, the display of certain infotainment content, the change of the color theme of the cabin lights, among others.

The disclosure is based on the idea to combine the understanding capabilities of the machine learning model, the sensing capabilities of the vehicle, and the customization of the operating settings or operating parameters of the vehicle in order to increase the user experience and/or optimize the driving behavior of the vehicle. The capability of the system to generate more complex rules for operating the vehicle may be improved. Furthermore, the robustness and ease of generation of more complex rules for operating a vehicle may be improved.

According to an embodiment, the input data for the machine learning model includes data of multiple data types selected from a group including audio-, text- and image-based data types. In other words, the input data can be multi-modal. This way, the capability, robustness, and ease of generation of more complex rules for operating a vehicle may be improved. Example data types would be txt, odt, ods, xls, docx, xtml, png, jpg, pdf, mp3, mp4, wmv, among others.

According to an embodiment, causing the vehicle to perform the action includes associating the action to one or more instructions for one or more components of the vehicle, and requesting the one or more components of the vehicle to execute the one or more instructions. More specifically, the processor may map or associate the action in the rule to one or more instructions, e.g. machine-readable code or control signals, to be sent to one or more specific components of the vehicle. These one or more components may then execute the one or more instructions upon their receipt. For example, the execution of the one or more instructions may lead to a parameter or setting for the operation of the one or more components being changed. Examples include cabin display content, head-up display, ADAS settings, seat settings, climate settings, infotainment settings (e.g. music, look&feel), navigation settings, among others.

According to an embodiment, the user is notified in case the association or mapping fails, e.g. the user may be prompted with a visual warning signal on a screen or an audio warning signal broadcasted via speakers in the cabin.

According to an embodiment, the processor is further configured to send one or more instructions associated with the action to a remote device that executes the received one or more instructions. The remote device may be a smartphone of the user or a smartphone of another user not present in the vehicle. The remote device can also be a cloud server, e.g. a back-end server connected to the internet through a cloud Application Programming Interface (API). The remote device may provide both computing power and storage, and may have the ability to also send back data to the processor and/or the vehicle, i.e. the communication between the processor and/or the vehicle and the remote device may work both ways. The processor may send the one or more instructions to the remote device by use of a communication module. Accordingly, the processor may include the communication module. Additionally or alternatively, the processor may request a communication module of the vehicle to send the one or more instructions to the remote device. According to an example, the remote device may be a home appliance. An example for a corresponding rule may then be: "Whenever the outside temperature is higher than 30°C and I get in the range of 10 km to my home, please switch on the air conditioning at home". In that case, the system may be able to communicate with the so-called "smart home". In particular, a suitable API may be available, proper credentials may be provided, and/or an authentication may take place for verifying that the user is allowed to interact with that API. According to an embodiment, the system further comprises the remote device.

According to an embodiment, the system further includes a database storing a list of rules. The processor is then further configured to save the generated rule in the list of rules stored in the database. The database may be installed locally (e.g. a Solid-State-Drive or Hard Disk Drive) or may be remotely accessible (e.g. a cloud server). The processor may then be able to continuously check at runtime whether the condition of a stored rule is met or if an event of a stored rule occurs, and can then carry out the rule automatically.

According to an embodiment, saving the generated rule includes storing the generated rule in an empty slot in the list of rules, identifying an overlapping rule in the list of rules and adapting the overlapping rule according to the generated rule, identifying an identical rule in the list of rules and discarding the generated rule, and/or identifying a conflicting rule in the list of rules and overwriting the conflicting rule with the generated rule. Discarding the generated rule may mean that the generated rule is used to operate the vehicle once but is not stored in the database. Alternatively, discarding may mean that the generated rule be deleted and the rule already stored in the list of rules be retrieved for operating the vehicle. According to an example, the user may be prompted with a dialogue in case of the processor identifying a conflicting rule in the list of rules. The user may then be provided with the choice to select whether the generated rule should be used to overwrite the conflicting rule or be discarded. According to an example, the processor may receive a user input including a confirmation that the conflicting rule should be overwritten (and that the generated rule should be kept).

According to an embodiment, the processor is further configured to compare the generated rule with the list of rules stored in the database, identify an overlapping or identical rule in the list of rules, discard the generated rule, and retrieve the overlapping or identical rule from the database for operating the vehicle.

According to an embodiment, the processor is further configured to check the stored list of rules at runtime, e.g. at a certain configurable cadence or triggered based on specific events or receipt of specific signals, and use the stored rule for operating the vehicle upon validating that at least one condition in the stored rule is met and/or that at least one event in stored rule has occurred.

According to an embodiment, the input data for the machine learning algorithm is based on or includes collected data related to the user input.

According to an embodiment, the input data for the machine learning algorithm is based on collected data related to the action of the user and collected data related to the state of the vehicle and/or collected data related to the state of the surrounding of the vehicle. More preferably, the input data for the machine learning algorithm is based on collected data related to the action of the user and collected data related to the state of the vehicle. Therein, the data may be collected by the one or more sensor monitoring the interior of the vehicle.

According to an embodiment, generating the rule includes applying a user-specific constraint. The user-specific constraint may be predetermined. For example, the user may be a child. Then a user-specific constraint may be that the maximum volume of an audio output, e.g. a played song, may be limited or that a specific content of the infotainment system may not be available. The user's parents may be able to configure these constraints upfront.

According to an embodiment, the system further includes another database configured to accumulate the collected data related to the action of the user (e.g. the user manually changing a parameter associated with the operation of the vehicle) and the state of the vehicle and/or the state of the surrounding of the vehicle. The processor is then further configured to recognize a pattern in the accumulated data by use of another (traditional) machine learning model, wherein the recognized pattern is inputted, preferably as additional input, to the machine learning model, i.e. the large language model or the neural network, for generating the rule. The processor may be configured to trigger the pattern recognition upon the accumulated data reaching or exceeding a predetermined data storage level or data storage size., e.g. at a data storage level of 100 MB or more, 1 GB or more, 10 GB or more, 100 GB or more, 1 TB or more, or 10 TB or more. Additionally or alternatively, the processor may be configured to trigger the pattern recognition at predetermined time intervals, i.e. on a regular basis and/or periodically. Additionally or alternatively, the processor may be configured to initiate generating the rule upon recognizing the pattern. In other words, the processor may be configured to recognize a patter in the in the accumulated data and initiate the generation of the rule upon recognition of the pattern. This may improve the capability and robustness of the system to generate more complex rules. Moreover, the system may be enabled to generate new rules automatically without the use of a direct or intentional user input such as a voice command. The pattern may be recognized by unsupervised learning. In a detailed example, the unsupervised learning stage may include a first step of data logging (such as user actions, user ID, vehicle state, infotainment state, etc.). In a second step, once data log size reaches a certain amount, data analysis is started (including clustering, histogram, pattern recognition). In a third step, commonly known unsupervised pattern recognition methods may be applied such as Kernel PCA, TSNE, Correlation/hierarchical/K-means clustering. A large language model may also be applied here. In a fourth, optional, step, a user confirmation on the generated rule may be asked.

According to an embodiment, the processor generates the rule or another rule for operating the vehicle based on using only the pattern as input for the machine learning model, i.e. the large language model or the neural network, for generating the rule.

According to an embodiment, the input data for the machine learning algorithm is based on the recognized pattern, and/or collected data related to the action of the user and collected data related to the state of the vehicle and/or collected data related to the state of the surrounding of the vehicle. This way, the capabilities of the system to generate rules for operating the vehicle may be improved, in particular in terms of robustness and achievable complexity of the generated rules.

According to an embodiment, the input data for the machine learning model is not based on collected data related to the (direct or intentional) user input, and in particular, is not based on collected data related to a voice command by the user. More specifically, the input data for the machine learning model may be based only on data that consists of the recognized pattern, and/or collected data related to the action of the user of the vehicle and collected data related to the state of the vehicle and/or collected data related to the state of the surrounding of the vehicle. This way, the generation of the rule may be carried out automatically and/or be more intuitive for the user, which improves the user experience.

According to an embodiment, the system further comprises a user interface such as a smartphone, touchscreen, or a microphone/speaker-device. Understandably, the user interface is configured to receive user inputs and to provide information to the user. The processor may then be further configured to cause the user interface to provide a representation of the generated rule to the user, and use the generated rule for operating the vehicle upon receipt of a user input including a confirmation of the generated rule, or adapt the generated rule upon receipt of and according to a user input, the user input including an adaption of the rule, and use the adapted rule for operating the vehicle. The representation of the rule may be an audio signal or a visual output as text on a screen. The user input including the confirmation or adaption of the rule may be received by the user interface (and/or by the one or more sensors) and transferred to the processor.

In another aspect, the present disclosure is directed at a vehicle, preferably a motor vehicle, having in-built the system as described herein.

In another aspect, the present disclosure is directed at a use of the system described herein for operating a vehicle, particularly a motor vehicle.

In another aspect, the present disclosure is directed at a method for rule-based operation of a vehicle, preferably a motor vehicle, the method comprising monitoring an interior and/or an exterior of the vehicle and/or receiving a user input and thereby collecting data related to a state of the vehicle and/or a state of the surrounding of the vehicle, and an action of the user of the vehicle and/or the user input. The method further comprises using a machine learning model with input data based on the collected data to generate a rule for operating the vehicle, the rule including at least one action associated with at least one condition and/or at least one event, wherein the machine learning model is a large language model or a neural network with multi-modal capabilities. Moreover, the method comprises analyzing the collected data to validate that the at least one condition is met and/or that the at least one event has occurred, and causing the vehicle to perform the action. Preferably, the machine learning model is a large language model.

According to an embodiment, the method further comprises accumulating the collected data related to the action of the user and the state of the vehicle and/or the state of the surrounding of the vehicle, and recognizing a pattern in the accumulated data by use of another machine learning model, wherein the recognized pattern is inputted, in particular as additional input, to the machine learning model. This may enable a more robust generation of rules having a higher complexity. Moreover, the system may be enabled to generate new rules automatically without the use of a direct or intentional user input (such as a voice command), which improves the user experience. The pattern may be recognized by unsupervised learning.

According to an embodiment, the method is a computer-implemented method.

In another aspect, the present disclosure is directed at a computer system, said computer system being configured to carry out several or all steps of the method described herein.

The computer system may comprise a processing unit, at least one memory unit and at least one non-transitory data storage. The non-transitory data storage and/or the memory unit may comprise a computer program for instructing the computer to perform several or all steps or aspects of the method described herein.

In another aspect, the present disclosure is directed at a non-transitory computer readable medium comprising instructions for carrying out several or all steps or aspects of the method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the method described herein.

The disclosure with respect to the system is also valid for the vehicle, use of the system, method, computer system, non-transitory computer readable medium, and computer program. This is particularly true for embodiments and functions. Further, it is to be understood that all features and embodiments disclosed herein can be combined if not explicitly stated otherwise.

### DRAWINGS

Exemplary embodiments and functions of the present disclosure are described herein in conjunction with the following drawings, showing schematically:
- Fig. 1: a system for rule-based operation of a vehicle;
- Fig. 2: a system for rule-based operation of a vehicle;
- Fig. 3: a system for rule-based operation of a vehicle;
- Fig. 4: a system for rule-based operation of a vehicle;
- Fig. 5: a method for rule-based operation of a vehicle;
- Fig. 6: a system for rule-based operation of a vehicle.

### DETAILED DESCRIPTION

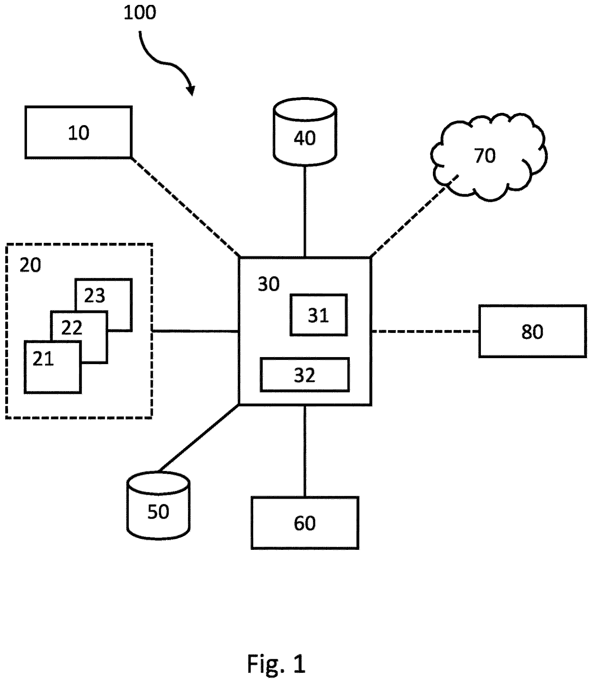

Fig. 1 shows a system 100 for rule-based operation of a vehicle 10, preferably a motor vehicle, according to an embodiment. As is shown in Fig. 1, the system 100 comprises a plurality of sensors 20 configured to monitor an interior and/or an exterior of the vehicle 10 and/or receive a user input. Thereby, the plurality of sensors 20 collect data related to a state of the vehicle10 and/or a state of the surrounding of the vehicle 10. In addition, the plurality of sensors 20 collect data related to an action of the user of the vehicle 10 and/or the user input. In Fig. 1 the plurality of sensors 20 comprises a microphone 21, a camera 22, and a temperature sensor 23. The sensors 21,22,23 of the plurality of sensors may be coupled or mounted to the vehicle 10.

The system 100 further comprises a processor 30 (see Fig. 1). The processor 30 is configured to receive the collected data from the plurality of sensors 20, and to use a machine learning model with input data based on the collected data to generate a rule for operating the vehicle 10. The rule includes at least one action associated with at least one condition and/or at least one event. According to an embodiment, machine learning model is a pretrained large language model 31. The large language model 31 may be installed locally. Additionally or alternatively, the large language model 31 may be remotely accessible for the processor 30 via a cloud server 70.

In the system 100 in Fig. 1 the processor 30 is further configured to analyze the collected data to validate that the at least one condition is met and/or that the at least one event has occurred. The processor 30 may analyze the collected data and thereby determine that a parameter or value associated with the condition or the event matches a certain threshold value. In view of this, the processor 30 may be configured to associate or map the at least one condition or the at least one event to outputs of the plurality of sensors 20.

In the system 100 in Fig. 1 the processor 30 then causes the vehicle 10 to perform the action. Therein, the processor 30 may associate the action to one or more instructions for one or more components of the vehicle 10, and may request the one or more components of the vehicle 10 to execute the one or more instructions.

The system 100 shown in Fig. 1 further includes a first database 40 storing a list of rules. The processor 30 may then be further configured to save the generated rule in the list of rules stored in the first database 40. The first database 40 may be installed locally or may be remotely accessible. A runtime rule engine 32 of the processor 30 (see Fig. 1) may then be able to continuously check whether the condition of a stored rule in the list of rules is met or if an event of the stored rule occurs. Thereby, the vehicle can be operated automatically.

The system 100 in Fig. 1 further includes another database 50 configured to accumulate the collected data related to the action of the user, e.g. the user manually changing a parameter associated with the operation of the vehicle 10, and the state of the vehicle 10 and/or the state of the surrounding of the vehicle 10. The processor 30 may then be further configured to recognize a pattern in the accumulated data by use of a machine learning model for unsupervised learning (not shown in Fig. 1).

The pattern may then be used as input, preferably additional input, to the large language model 31 in Fig. 1. This may improve the capability and robustness of the system 100 to generate more complex rules. Moreover, the system 100 may be enabled to generate new rules automatically without the use of a direct or intentional user input such as a voice command. In particular, the input data for the large language model 31 may be based on the recognized pattern, and/or collected data related to the action of the user and collected data related to the state of the vehicle 10 and/or collected data related to the state of the surrounding of the vehicle 10. More specifically, the input data for the large language model 31 may be based only on data that consists of the recognized pattern, and/or collected data related to the action of the user of the vehicle 10 and collected data related to the state of the vehicle 10 and/or collected data related to the state of the surrounding of the vehicle 10. This way, the generation of the rule may be carried out automatically and/or be more intuitive for the user, which improves the user experience.

The system 100 in Fig. 1 further comprises a user interface 60 such as a smartphone, touchscreen, or a microphone/speaker-device. The processor 30 may then be further configured to cause the user interface 60 to provide a representation of the generated rule to the user. The user may then be able to confirm or adapt the represented rule. Thus, a user input including the confirmation or adaption of the rule may be received by the user interface 60 and/or by the plurality of sensors 20, and transferred to the processor 30. When a user input including a confirmation of the generated rule is received, the processor 30 may use the generated rule for operating the vehicle 10. When a user input including an adaption of the rule is received, the processor 30 may adapt the generated rule according to a user input and use the adapted rule for operating the vehicle 10.

In Fig. 1 the processor 30 is coupled or connected to a remote device 80, e.g. via a wireless or wired coupling or connection. The processor 30 may be further configured to send one or more instructions associated with the action to the remote device 80 that executes the received one or more instructions. The remote device 80 may be a smartphone of the user or a smartphone of another user not present in the vehicle 10. As another example, the remote device 80 may be a home appliance. The processor may send the one or more instructions to the remote device by use of a communication module (not shown in Fig. 1). The communication module may be a part of the processor 30 or a part of the vehicle 30.

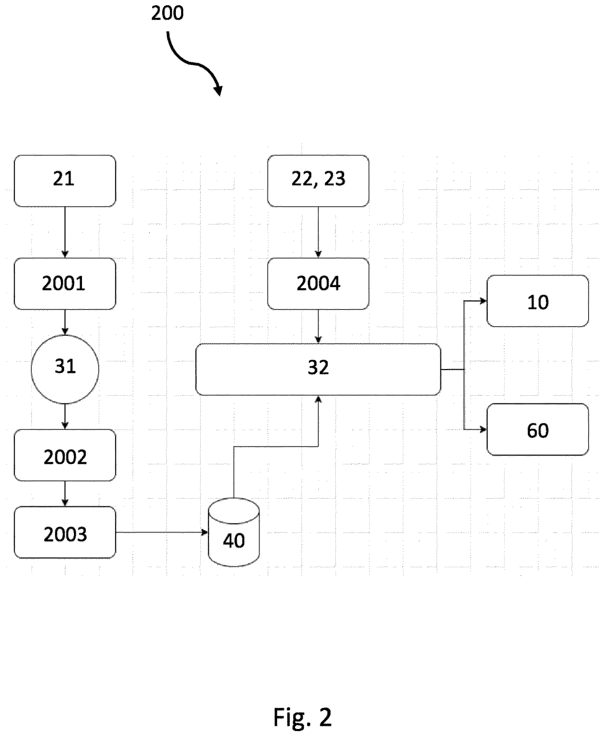

Fig. 2 shows a system 200 for rule-based operation of a vehicle 10, preferably a motor vehicle, according to a further embodiment. The system 200 shown in Fig. 2 comprises similar or the same components as the system 100 shown in Fig. 1. The processor in the system of Fig. 2 comprises the runtime rule engine 32 and the large language model 31. A user input received by the cabin microphone 21 may be subjected to audio signal pre-processing at 2001. The pre-processed user input may then be inputted to the large language model 31. The output of the large language model 31 may then be subjected to the large-language-model post-processing at 2002 and a rule may be generated at 2003. The rule may be stored in the database 40. The runtime rule engine 32 receives and/or retrieves the rule from the database 40 and receives vehicle signals (Bus) 2004, i.e. sensor outputs, from one or more sensors such as the camera 22 and the temperature sensor 23.

The runtime rule engine 32 of the system 200 in Fig. 2 may be configured to associate or map the at least one condition or the at least one event to the vehicle signals or functions of the vehicle signals. The runtime rule engine 32 may analyze the vehicle signals to validate that at least one condition in the rule is met and/or that at least one event in the rule has occurred. Furthermore, the runtime rule engine 32 may map or associate the action in the rule to one or more instructions, e.g. machine-readable code or control signals, to be sent to one or more components of the vehicle 10, such as the climate control or the ADAS control. These one or more components of the vehicle 10 may then be configured to execute the one or more instructions upon their receipt, which may lead to certain vehicle settings being changed, e.g. the target cabin temperature and/or an ADAS level.

The system 200 in Fig. 2 further comprises the user interface 60, and the runtime rule engine 32 may then be further configured to cause the user interface 60 to provide a representation of the generated rule to the user.

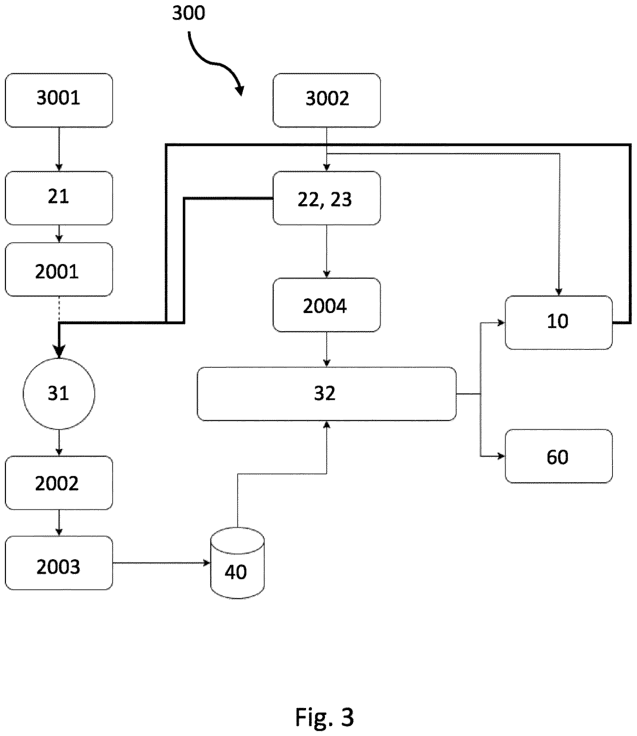

Fig. 3 shows a system 300 for rule-based operation of a vehicle 10, preferably a motor vehicle, according to a further embodiment. The system 300 shown in Fig. 3 comprises similar or the same components as the system 100 shown in Fig. 1 and the system 200 shown in Fig. 2.

As shown in Fig. 3, a user input 3001, e.g. a voice command, is received by the cabin microphone 21 and subjected to audio signal pre-processing at 2001.

As shown in Fig. 3, a user action 3002 is monitored by the sensors 22,23. The user action may refer to the user operating the vehicle, and in particular, manually changing one or more settings of one or more components of the vehicle, as indicated by the arrow from the user action 3002 to the vehicle 10. The input data for the large language model 31 may then be based on the collected data related to the action of the user and related to a state of the vehicle 10 and/or a state of the surrounding of the vehicle 10 as indicated in Fig. 3 by the arrow from vehicle 10 to the large language model 31 and by the arrow from the one or more sensors 22, 23 to the large language model 31, respectively. This way, the capabilities of the system to generate rules for operating the vehicle may be improved, in particular in terms of robustness and achievable complexity of the generated rules. Preferably, the input data for the for the large language model 31 may not be based on the user input 3001. This way, the generation of the rule may be carried out automatically and/or be more intuitive for the user, which improves the user experience.

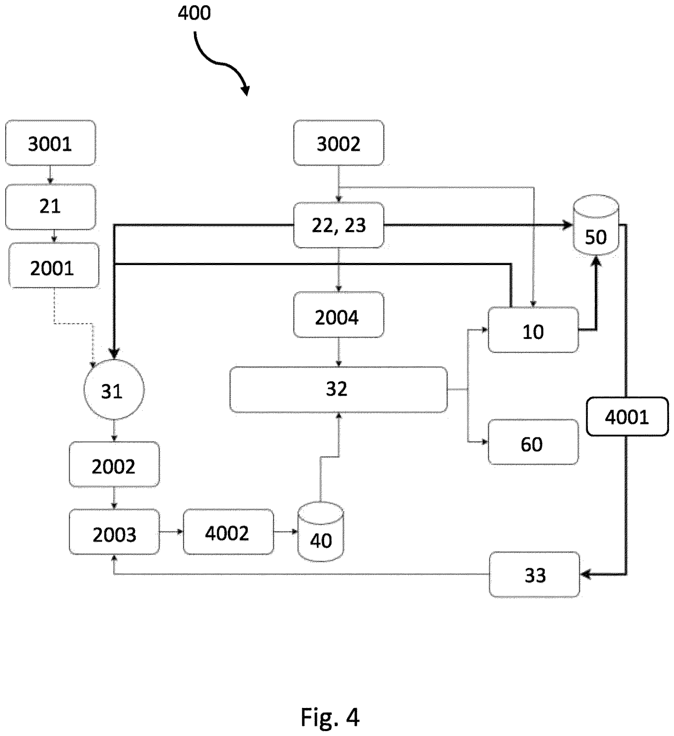

Fig. 4 shows a system 400 for rule-based operation of a vehicle 10, preferably a motor vehicle, according to a further embodiment. The system 400 shown in Fig. 4 comprises similar or the same components as the system 100 shown in Fig. 1, the system 200 shown in Fig. 2, and the system 300 shown in Fig. 3.

The system 400 in Fig. 4 comprises a first database 40 configured to store the generated rule and a second database 50 configured to accumulate collected data related to the action of the user (e.g. the user manually changing a parameter associated with the operation of the vehicle 10) as indicated in Fig. 4 by the arrow from the vehicle 10 to the database 50 and collected data related to the state of the vehicle 10 and/or the state of the surrounding of the vehicle 10 as indicated in Fig. 4 by the arrow from the one or more sensors 22,23 to the database 50. A training module for pattern detection 33 may then receive and/or retrieve the accumulated data 4001 (as indicated in Fig. 4 by the arrow from the database 50 to the training module for pattern detection 33) in order to recognize a pattern in the accumulated data 4001. The recognized pattern may then be used as additional or, more preferably, single input for generating the rule 2003 as indicated in Fig. 4 by the arrow from the training module for pattern detection 33 to the generated rule 2003. This way, the capabilities of the system to generate rules for operating the vehicle may be improved, in particular in terms of robustness and achievable complexity of the generated rules. Preferably, in the system 400 shown in Fig.4, a user input 3001 is not used for generating the rule 2003. This way, the generation of the rule may be carried out automatically and/or be more intuitive for the user, which improves the user experience. Optionally, a user confirmation 4002 of the generated rule may be obtained.

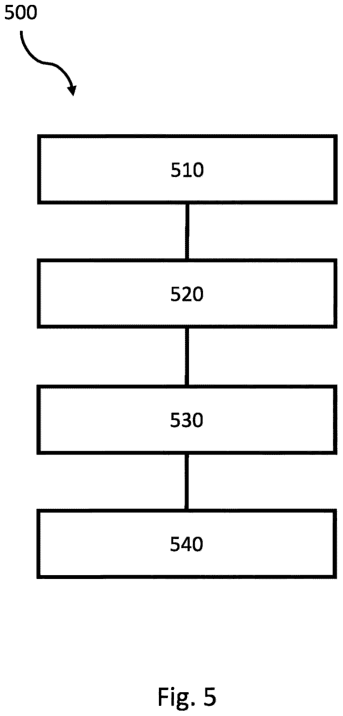

Fig. 5 shows a flow chart of a method 500 for rule-based operation of a vehicle, preferably a motor vehicle. The method comprises the following steps:

| | |
|---|---|
| 510: | monitoring an interior and/or an exterior of the vehicle and/or receiving a user input and thereby collecting data related to a state of the vehicle and/or a state of the surrounding of the vehicle, and an action of the user of the vehicle and/or the user input; |
| 520: | using a machine learning model with input data based on the collected data to generate a rule for operating the vehicle; |
| 530: | analyzing the collected data to validate that the at least one condition is met and/or that the at least one event has occurred; and |
| 540: | causing the vehicle to perform the action. |

In further embodiments, the method 500 comprises additional features and functions as described herein for the system 100 shown in Fig. 1, the system 200 shown in Fig. 2, the system 300 shown in Fig. 3, and the system 400 shown in Fig. 4.

As listed in Table 1, several elements may be defined in the input for the large language model 31 of the systems and methods described herein: a general task, structured output format (XML, JSON, etc.), output rule fields (person, triggering events/conditions, action), input format (e.g., driver_seat_voice: "When..." + optional vehicle state), answering only if the input is clear (prioritizing precision over recall), asking for confirmation, asking for clarification/adjustments (chat mode), describing rule fields in the prompt (e.g., action ₌ field that contains what the person expects to be performed when given conditions are met). To increase accuracy, further techniques or input elements may be employed: role assignment, providing an example (one-shot or few-shot), and breaking down the task into a step-by-step process (chain-of-thought). The output rule fields may comprise an "Event" field and/or one or more "Condition" fields (e.g. "Condition 1", "Condition 2", and so on) that are combined in a logical manner, e.g. by an AND, OR, or another logical operation (e.g. "Condition 1" AND "Condition 2") . The event is then considered to have occurred when all conditions are met, and more precisely, if the logical chain of the "Condition" fields is fulfilled. The "person" field may also be replaced by, considered as, or comprised in a "Condition" field of such one or more "Condition" fields.

**Table 1**

| **Prompt part** | **Sample text** |
|---|---|
| General task | *Analyze and understand the custom rule provided in command within the <text> tags and output only: person, condition, action in a bulleted list* |
| Structured output format | *Follow the json format provided below:* |
| Output rule fields | *<format>* |
| | *{"Person":* |
| | *"Conditⁱon":* |
| | *"Action":}* |
| | *<*/*format>* |
| Input format | *<text>Thomas (driver_seat): When my daughter is in the rear seat, please pre-load Super Mario to the rear seat infotainment and turn the seat heating off<ltext>* |
| Answering only if the input is clear | *Answer only if you know the answer; otherwise admit you don't know it* |
| Asking for confirmation | *Otherwise tell me you don't know it and ask for clarification* |
| Asking for clarification/adjustments (chat mode) | *If the input is not clear to create the rule always ask for clarification* |
| Describing rule fields in the prompt | *Action* - *field that contains what the person expects to be performed when given conditions are met* |
| Role assignment | *You're Jack, the best data scientist and assistant in the world. Your main task is...* |
| Providing an example (one-shot or few-shot) | *<example>* |
| | *<text>Whenever I get close to my home and it's late, please play the song "Coming home"<*/*text>* |
| | *{_{"}Person": ["me"],* |
| | *"Condition": ["when I get close to my home", "it's late"],* |
| | *"Action": ["play the song "Coming home'"']}* |
| | *<*/*example>* |

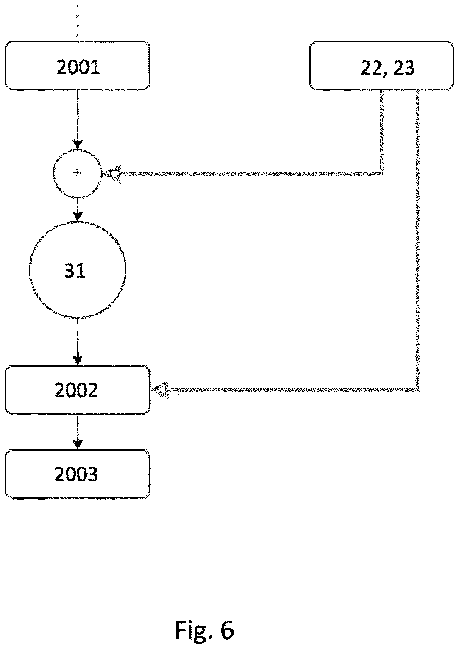

As shown for the cut-out of system 300 or 400 in Fig. 6, in the case that the vehicle state signals are used, these signals can either be directly concatenated with the output rule or incorporated into the input as additional context.

Next, several more detailed example implementations for the systems and methods described herein are given.

In a detailed example implementation, the generated rules may be translated into functions. The rule fields provided by the large language model (LLM) may be deterministically mapped to rules composed of function calls. These functions may be implemented separately to handle the most common use cases. Associating or mapping can be achieved using different approaches: (1) using static rules for searching output rule fields to find specific formulations, (2) utilizing a LLM that is fine-tuned to select specific functions based on the input given by the first LLM, or (3) using a LLM with a prompt adapted to the new task. Additionally, a retrieval-augmented generation (RAG) approach with a large database containing numerous usage examples can be considered as well.

In the following example, the input text may be: "Whenever I get close to my home, please play the song "Coming home"". The LLM response may then be: "person: me, condition: when I get close to my home, action: play the song "Coming home"". Rule association or mapping may depend on the output devices integrated into the vehicle. For each device, there may be a separate set of mapping functions. The above example refers to the infotainment system and GPS.

The first approach mentioned herein relates to static search rules for specific phrases. For example, if "play the song X" is in the action field, then use function "play_song_using_infotainment(X)", if "get close to Y" is in the condition field, then use function vehicle_is_close_to_coordinates(Y). The output may then be: if vehicle_is_close_to_coordinates("my home") then play_song_using_infotainment("Coming home"). Applicable functions may be: play_song_using_infotainment(song_name) and vehicle_is_close_to_location(location_name).

The communication with the specific device may be handled over a specific BUS (LIN, CAN, ETH, etc.) and may be implemented separately.

The second approach mentioned herein makes use of a fine-tuned LLM. This approach may require preparing training data where the input is formatted to match the LLM's output, and the output is the appropriate function to be executed. An available list of predefined functions with descriptions can be included with the input. The input may be: "person: me, condition: when I get close to my home, action: play the song "Coming home"". The LLM response may then be: "if vehicle_is_close_to_coordinates("my home") then play_song_using_infotainment("Coming home").

The third approach mentioned herein refers to the use of an LLM with a prompt adapted to the new task and one/multi-shot learning and RAG. This approach is similar to the LLM being used for rule fields generation. Incorporating a RAG approach with a large database containing a plurality of usage examples can be considered. An available list of functions with descriptions can be attached to the input. Thus, the input may be: "person: me, condition: when I get close to my home, action: play the song "Coming home"". The most similar example may then be searched and found in the database (retrieval part of the RAG approach): "<example> person: passenger, condition: when I get close to my work, action: play the song "Never give up", LLM response: if vehicle_is_close_to_coordinates("my work") then play_song_using_infotainment("Never give up") </example>". The LLM response may then be: "if vehicle_is_close_to_coordinates("my home") then play_song_using_infotainment("Coming home")".

In the second and third approach, the output generated by the LLM may require post-processing. That is, before using any function it may be confirmed and validated that the rule is secure and safe. For instance, a tool called Llama Guard was designed to classify content for LLMs by examining both the inputs (through prompt classification) and the outputs (via response classification). NeMo Guardrails is another security toolset, offering a broad set of programmable guardrails to control and guide LLM inputs and outputs, including content moderation, topic guidance, hallucination prevention, and response shaping.

In the following, example LLM structures are given. The selection of a service provider and model variant does not affect the basic working principles described herein, although there may be slight differences in accuracy. Top-performing state-of-the-art models are: Llama3 70B by Meta, Gemini Ultra by Deepmind (Google), Claude 3 Opus by Anthropic, and ChatGPT 4 by OpenAl.

A benchmark table is provided in Table 2.

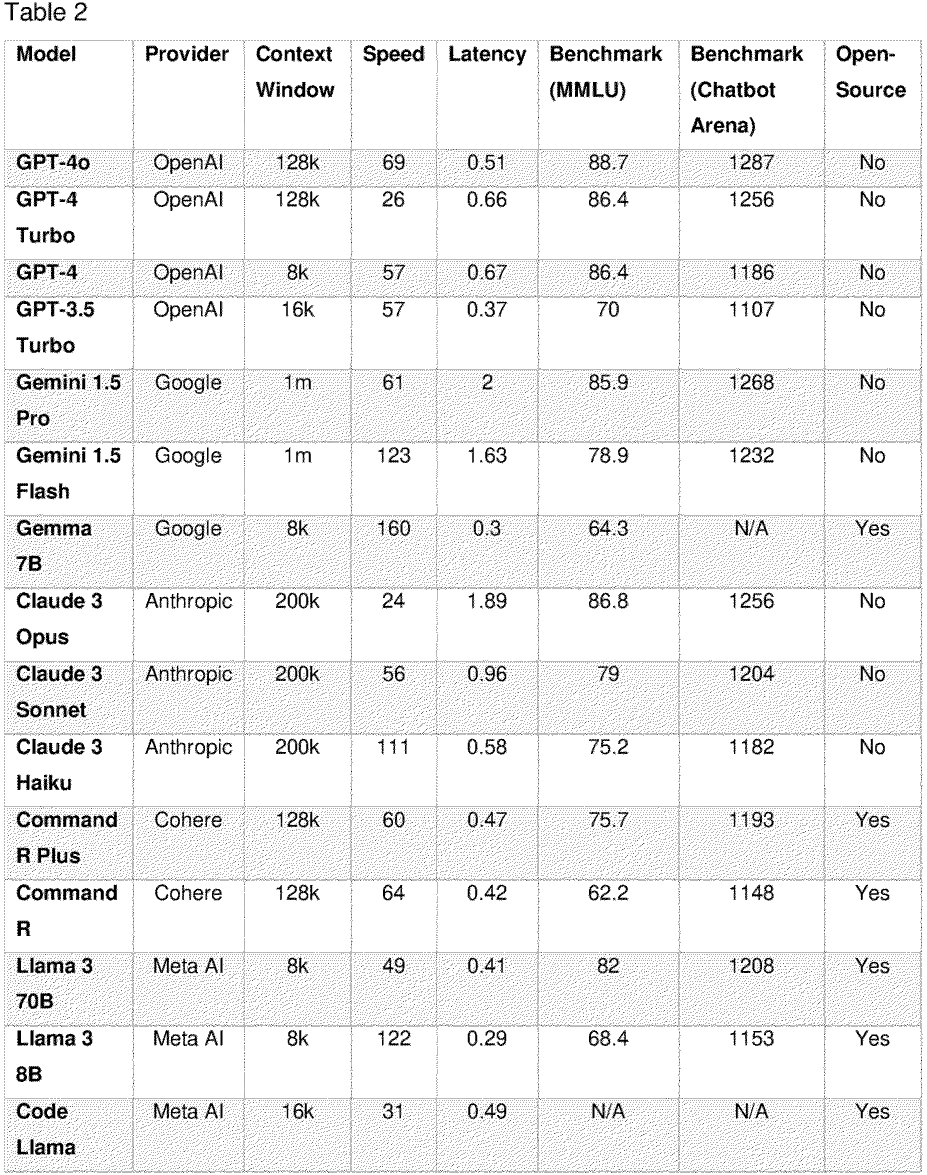

In the following, experimental results with the systems and methods described herein are given to further highlight the various features and functions of the systems and methods of the present disclosure.

The following Experiments 1 to 4 are directed at rule fields generation.

Experiment 1 makes use of a simple input text. In Experiment 1, the input prompt is: "You're Jack, the best data scientist and assistant in the world. Your main task is to analyze and understand the custom rule provided in command within the <text> tags and only output: person, condition, action in a 3 bulleted list. Answer only if you know the answer; otherwise tell me you don't know it and ask for clarification. After you answer ask me for the confirmation if you did understand correctly. Follow the format provided below:

```
 <format>
 → Person
 → Condition
 → Action
 </format>
```

Here is an example on how to respond in a standard interaction:

```
 <example>
 <text>Whenever I get close to my home, please play the song "Coming
 home"</text>
 → Person: me
 → Condition: when I get close to my home
 → Action: play the song "Coming home"
 </example>
 <text>Upon getting close to work turn the cabin lighting green</text>."
```

The output of the LLM in Experiment 1 is: "I understand your request. Here's the analysis based on the command provided:

```
 <text>
 → Person: unspecified (assumed to be the user or anyone triggering the condition)
 → Condition: Upon getting close to work
 → Action: turn the cabin lighting green
 </text>
```

Could you please confirm if this is what you were looking for?".

Experiment 2 makes use of advanced input text. In Experiment 2, the input prompt is: "You're Jack, the best data scientist and assistant in the world. Your main task is to analyze and understand the custom rule provided in command within the <text> tags and only output: person, condition, action in a 3 bulleted list. Answer only if you know the answer; otherwise tell me you don't know it and ask for clarification. After you answer ask me for the confirmation if you did understand correctly. Follow the format provided below:

```
 <format>
 → Person
 → Condition
 → Action
 </format>
```

Here is an example on how to respond in a standard interaction:

```
 <example>
 <text>Whenever I get close to my home, please play the song "Coming
 home"</text>
 → Person: me
 → Condition: when I get close to my home
 → Action: play the song "Coming home"
 </example>
 <text>On weekends if the weather is nice, the kids are on-board and we are going
 to visit grandma, take the scenic route along the river instead of the highway, but
 not if it takes more than 10 min more than the fastest route.</text>".
```

The output of the LLM in Experiment 2 is: "I can help with that! Here's the analysis of the custom rule provided:

```
 → Person: we
 → Condition: On weekends if the weather is nice, the kids are on-board and we
 are going to visit grandma
 → Action: take the scenic route along the river instead of the highway, but not if it
 takes more than 10 min more than the fastest route.
```

Could you please confirm if I understood correctly?".

Experiment 3 makes use of an JSON format output. In Experiment 3, the input prompt is: "You're Jack, the best data scientist and assistant in the world. Your main task is to analyze and understand the custom rule provided in command within the <text> tags and only output: person, condition, action in a 3 bulleted list. Answer only if you know the answer; otherwise tell me you don't know it and ask for clarification. After you answer ask me for the confirmation if you did understand correctly. Follow the json format provided below:

```
 <format>
 {"Person":
 "Condition":
 "Action":}
 </format>
 
```

Here is an example on how to respond in a standard interaction:

```
<example>
 <text>Whenever I get close to my home and it's late, please play the song
 "Coming home"</text>
 {"Person": "me",
 "Condition": ["when I get close to my home", "it's late"],
 "Action": "play the song "Coming home""}
 </example>
 <text>On weekends if the weather is nice, the kids are on-board and we are going
 to visit grandma, take the scenic route along the river instead of the highway, but
 not if it takes more than 10 min more than the fastest route.</text>."
```

The output of the LLM in Experiment 3 is: "I can help with that! Here's the analysis of the custom rule provided:

```
 {
 "Person": "we",
 "Condition": ["On weekends", "if the weather is nice", "the kids are on-board", "we
 are going to visit grandma", "not if it takes more than 10 min more than the fastest
 route"],
 "Action": "take the scenic route along the river instead of the highway"
 }
```

Could you please confirm if I understood it correctly?".

Experiment 4 makes use of JSON list output and added speaker's name. In Experiment 4, the input prompt is: "You're Jack, the best data scientist and assistant in the world. Your main task is to analyze and understand the custom rule provided in command within the <text> tags and only output: person, condition, action in a 3 bulleted list. Answer only if you know the answer; otherwise tell me you don't know it and ask for clarification. After you answer ask me for the confirmation if you did understand correctly. Follow the json format provided below:

```
 <format>
 {"Person":
 "Condition":
 "Action":}
 </format>
 
```

Here is an example on how to respond in a standard interaction:

```
 <example>
 <text>Whenever I get close to my home and it's late, please play the song
 "Coming home"</text>
 {"Person": ["me"],
 "Condition": ["when I get close to my home", "it's late"],
 "Action": ["play the song "Coming home""]}
 </example>
 <text>Thomas (driver_seat): When my daughter is in the rear seat, please pre-
 load Super Mario to the rear seat infotainment and turn the seat heating off</text>
```

The output of the LLM in Experiment 4 is: "{"Person": ["Thomas"],
"Condition": ["my daughter is in the rear seat"],
"Action": ["pre-load Super Mario to the rear seat infotainment", "turn the seat heating off"]}".

The following Experiments 5 to 7 are directed at rule fields to function translation (LLM + one-shot / RAG).

Experiment 5 employs an advanced input. In Experiment 5, the input prompt is: "You're Jack, the best data scientist and assistant in the world. Your main task is to use predefined functions based on the custom rule provided in command within the <rule> tags. Answer only if you know the answer; otherwise tell me you don't know it and ask for clarification. After you answer ask me for the confirmation if you did understand correctly. Here is an example on how to respond in a standard interaction:

```
 <example>
 <rule>{
 "Person": "we",
 "Condition": ["On weekends", "if the weather is nice", "the kids are on-board", "we
 are going to visit grandma", "not if it takes more than 10 min more than the fastest
 route"],
 "Action": "take the scenic route along the river instead of the highway"
 }
 </rule>
 if (check_time("weekend") and check_weather("nice") and
 check_seat_occupancy("kids") and check_gps_target("grandma") and
 check_gps_route_time("grandma", "scenic route along the river")<10 min):
 set_gps_route("grandma", "scenic route along river")
 </example>
 <rule>{"Person": ["Thomas"],
 "Condition": ["my daughter is in the rear seat"],
 "Action": ["pre-load Super Mario to the rear seat infotainment", "turn the seat
 heating off"]}<\rule>."
```

The output of the LLM in Experiment 5 is: "I understand. Let's break down the rule and translate it into a function:

```
 <rule>{
 "Person": ["Thomas"],
 "Condition": ["my daughter is in the rear seat"],
 "Action": ["pre-load Super Mario to the rear seat infotainment", "turn the seat
 heating off"]
 }
 </rule>
```

Translated into a function:

```
if person == "Thomas" and check_rear_seat_occupancy("daughter"):
  pre_load_game("Super Mario", "rear seat infotainment")
  turn_off_seat_heating()
```

Now, please confirm if I understood it correctly."

Experiment 6 is directed at asking for code only. In Experiment 6, the input prompt is: "You're Jack, the best data scientist and assistant in the world. Your main task is to translate custom rule provided in command within the <rule> tags to predefined functions. Answer only with the function code and only if you know the answer; otherwise tell me you don't know it and ask for clarification. After you answer ask me for the confirmation if you did understand correctly. Here is an example on how to translate a rule to functions:

```
 <example>
 <rule>{
 "Person": "we",
 "Condition": ["On weekends", "if the weather is nice", "the kids are on-board", "we
 are going to visit grandma", "not if it takes more than 10 min more than the fastest
 route"],
 "Action": "take the scenic route along the river instead of the highway"
 }
 </rule>
 if (check_time("weekend") and check_weather("nice") and
 check_seat_occupancy("kids") and check_gps_target("grandma") and
 check_gps_route_time("grandma", "scenic route along the river")<10 min):
 set_gps_route("grandma", "scenic route along river")
 </example>
 <rule>{"Person": ["Thomas"],
 "Condition": ["my daughter is in the rear seat"],
 "Action": ["pre-load Super Mario to the rear seat infotainment", "turn the seat
 heating off"]}<\rule>."
```

The output of the LLM in Experiment 6 is: "def apply_rule_1 ():

```
  if (check_time("weekend") and
     check_weather("nice") and
     check_seat_occupancy("kids") and
     check_gps_target("grandma") and
     check_gps_route_time("grandma", "scenic route along the river") < 10 min
     set_gps_route("grandma", "scenic route along river")
     def apply_rule_2():
  if check_seat_presence("rear", "daughter"):
     pre_load_game("Super Mario", "rear seat infotainment")
     turn_off_seat_heating()
     # Assuming the functions check_time, check_weather, check_seat_occupancy,
     # check_gps_target, check_gps_route_time, set_gps_route,
     check_seat_presence,
     # pre_load_game, and turn_off_seat_heating are predefined.
```

Could you confirm if I understood the rules correctly?".

Experiment 7 is directed at asking for LUA code output, the example is removed. In Experiment 7, the input prompt is: "You're Jack, the best programmer and assistant in the world. Your main task is to translate custom rule provided in command within the <rule> tags to lua functions. Answer only with the function code and only if you know the answer; otherwise tell me you don't know it and ask for clarification. After you answer ask me for the confirmation if you did understand correctly.

```
 <rule>{"Person": ["Thomas"],
 "Condition": ["my daughter is in the rear seat"],
 "Action": ["pre-load Super Mario to the rear seat infotainment", "turn the seat
 heating off"]}<\rule>."
```

The output of the LLM in Experiment 7 is: "function applyRule(person, condition)

```
  if person == "Thomas" and condition == "my daughter is in the rear seat" then
     preLoadSuperMario()
     turnSeatHeatingOff()
  end
  end
  function preLoadSuperMario()
  -- code to preload Super Mario to the rear seat infotainment
  end
  function turnSeatHeatingOff()
  -- code to turn the seat heating off
  end
```

Did I understand the rule correctly?".

### Reference numeral list

- 10: vehicle
- 20: plurality of sensors
- 21: microphone
- 22: camera
- 23: temperature sensor
- 30: processor
- 31: large language model
- 32: runtime rule engine
- 40: database storing a list of rules
- 50: another database
- 60: user interface
- 70: cloud server
- 80: remote device
- 100: system for rule-based operation of a vehicle
- 200: system for rule-based operation of a vehicle
- 300: system for rule-based operation of a vehicle
- 400: system for rule-based operation of a vehicle
- 2001: audio signal pre-processing
- 2002: large-language-model post-processing
- 2003: generated rule
- 2004: vehicle signals
- 3001: user input
- 3002: user action
- 4001: accumulated data
- 4002: user confirmation
- 500: method for rule-based operation of a vehicle
- 510: method step of monitoring an interior and/or an exterior of the vehicle and/or receiving a user input and thereby collecting data related to a state of the vehicle and/or a state of the surrounding of the vehicle, and an action of the user of the vehicle and/or the user input
- 520: method step of using a machine learning model with input data based on the collected data to generate a rule for operating the vehicle
- 530: method step of analyzing the collected data to validate that the at least one condition is met and/or that the at least one event has occurred
- 540: method step of causing the vehicle to perform the action

## Claims

1. A system (100) for rule-based operation of a vehicle (10), preferably a motor vehicle, the system (100) comprising
one or more sensors (20) configured to
monitor an interior and/or an exterior of the vehicle (10) and/or receive a user input (3001) and thereby collect data related to
a state of the vehicle (10) and/or a state of the surrounding of the vehicle (10), and
an action (3002) of the user of the vehicle (10) and/or the user input (3001); and
a processor (30) configured to
receive the collected data from the one or more sensors (20),
use a machine learning model (31) with input data based on the collected data to generate a rule (2003) for operating the vehicle (10), the rule (2003) including at least one action associated with at least one condition and/or at least one event, wherein the machine learning model (31) is a large language model or a neural network with multi-modal capabilities,
analyze the collected data to validate that the at least one condition is met and/or that the at least one event has occurred, and
cause the vehicle (10) to perform the action.

2. The system (100) of claim 1, wherein the input data includes data of multiple data types selected from a group including audio-, text- and image-based data types.

3. The system (100) of claim 1 or 2, wherein causing the vehicle (10) to perform the action includes
associating the action to one or more instructions for one or more components of the vehicle (10), and
requesting the one or more components of the vehicle (10) to execute the one or more instructions.

4. The system (100) of any one of claims 1 to 3, wherein the processor (30) is further configured to send one or more instructions associated with the action to a remote device (80) that executes the received one or more instructions.

5. The system (100) of any one of claims 1 to 4, wherein the system (100) further includes a database (40) storing a list of rules, wherein the processor (30) is further configured to save the generated rule (2003) in the list of rules stored in the database (40).

6. The system (100) of any one of claims 1 to 5, wherein generating the rule (2003) includes applying a user-specific constraint.

7. The system (100) of any one of claims 1 to 6, wherein the system (100) further includes another database (50) configured to accumulate the collected data related to the action of the user and the state of the vehicle (10) and/or the state of the surrounding of the vehicle (10), and wherein the processor (30) is further configured to recognize a pattern in the accumulated data (4001) by use of another machine learning model, wherein generating the rule (2003) is initiated upon recognizing the pattern and/or wherein the recognized pattern is inputted to the machine learning model (31) for generating the rule (2003).

8. The system (100) of any one of claims 1 to 7, wherein the input data for the machine learning algorithm is based on
the recognized pattern, and/or
collected data related to the action (3002) of the user and collected data related to the state of the vehicle (10) and/or collected data related to the state of the surrounding of the vehicle (10).

9. The system (100) of any one of claims 1 to 8, wherein the input data for the machine learning algorithm is not based on collected data related to the user input (3001).

10. The system (100) of any one of claims 1 to 9, wherein the system (100) further comprises a user interface (60), and wherein the processor is further configured to
cause the user interface to provide a representation of the generated rule (2003) to the user, and
use the generated rule (2003) for operating the vehicle (10) upon receipt of a user input including a confirmation (4002) of the generated rule (2003), or adapt the generated rule (2003) upon receipt of and according to a user input including an adaption of the rule (2003) and use the adapted rule for operating the vehicle (10).

11. A vehicle, preferably a motor vehicle having in-built a system (100) according to any one of claims 1 to 10.

12. Use of a system (100) according to any of claims 1 to 10 for operating the vehicle (10), particularly a motor vehicle.

13. A method (500) for rule-based operation of a vehicle (10), preferably a motor vehicle, the method comprising
monitoring (510) an interior and/or an exterior of the vehicle (10) and/or receiving a user input (3001) and thereby collecting data related to a state of the vehicle (10) and/or a state of the surrounding of the vehicle (10), and an action (3002) of the user of the vehicle (10) and/or the user input (3001);
using (520) a machine learning model (31) with input data based on the collected data to generate a rule (2003) for operating the vehicle (10), the rule (2003) including at least one action associated with at least one condition and/or at least one event, wherein the machine learning model (31) is a large language model or a neural network with multi-modal capabilities;
analyzing (530) the collected data to validate that the at least one condition is met and/or that the at least one event has occurred; and
causing (540) the vehicle (10) to perform the action.

14. The method of claim 13, wherein the method further comprises
accumulating the collected data related to the action of the user and the state of the vehicle (10) and/or the state of the surrounding of the vehicle (10); and
recognizing a pattern in the accumulated data (4001) by use of another machine learning model, wherein the recognized pattern is inputted to the machine learning model (31) for generating the rule (2003).

15. The method of claim 13 or 14, wherein the input data for the machine learning algorithm (31) is based only on data that consists of
the recognized pattern, and/or
collected data related to the action (3002) of the user of the vehicle (10) and collected data related to the state of the vehicle (10) and/or collected data related to the state of the surrounding of the vehicle (10).
